# EUROPEAN PATENT SPECIFICATION

(11) **EP 4 260 609 B1**
(45) Date of publication and mention of the grant of the patent: **03.09.2025**
(21) Application number: 21840128.9
(22) Date of filing: 14.12.2021
(51) Int. Cl.: H04W 36/00, H04B 7/024, H04B 7/06

(54) **MEDIA ACCESS CONTROL RESET FOR LAYER 1/LAYER 2 CENTRIC MOBILITY**
MEDIENZUGRIFFSSTEUERUNGSRÜCKSETZUNG FÜR SCHICHT-1-/SCHICHT-2-ZENTRISCHE MOBILITÄT
RÉINITIALISATION DE CONTRÔLE D'ACCÈS AU SUPPORT POUR MOBILITÉ CENTRÉE DE COUCHE 1/COUCHE 2

(30) Priority: 14.12.2020 US 202063125372 P
(43) Date of publication of application: 18.10.2023
(73) Proprietor: Telefonaktiebolaget LM Ericsson (publ), 164 83 Stockholm (SE)
(72) Inventor: DA SILVA, Icaro Leonardo, 170 77 Solna (SE); MÄÄTTÄNEN, Helka-Liina, 02360 Espoo (FI); RAMACHANDRA, Pradeepa, 589 29 Linköping (SE)
(74) Representative: Ericsson
(86) International application number: PCT/IB2021/061729
(87) International publication number: WO 2022/130219

(56) References cited:
- US-A1- 2020 112 886
- US-A1- 2020 351 055
- SONY: "Considerations on the enhancement of multi-beam operation", vol. RAN WG1, no. E-meeting; 20201026 - 20201113, 23 October 2020 (2020-10-23), XP051946634, Retrieved from the Internet <URL:https://ftp.3gpp.org/tsg_ran/WG1_RL1/TSGR1_103-e/Docs/R1-2008346.zip R1-2008346.docx> [retrieved on 20201023]
- "3rd Generation Partnership Project; Technical Specification Group Radio Access Network; NR; Medium Access Control (MAC) protocol specification (Release 16)", vol. RAN WG2, no. V16.2.1, 5 October 2020 (2020-10-05), pages 1 - 154, XP051961393, Retrieved from the Internet <URL:ftp://ftp.3gpp.org/Specs/archive/38_series/38.321/38321-g21.zip 38321-g21.docx> [retrieved on 20201005]
- HUAWEI ET AL: "3 types of HO in NR", vol. RAN WG2, no. Athens, GR; 20180226 - 20180302, 16 February 2018 (2018-02-16), XP051400149, Retrieved from the Internet <URL:http://www.3gpp.org/ftp/tsg%5Fran/WG2%5FRL2/TSGR2%5F101/Docs/> [retrieved on 20180216]

## Description

### CROSS REFERENCE TO RELATED APPLICATIONS

The present application claims the benefit of and priority to U.S. Provisional Patent Application No. 63/125,372, filed December 14, 2020, titled "MEDIA ACCESS CONTROL RESET FOR LAYER 1/LAYER 2 CENTRIC MOBILITY".

### TECHNICAL FIELD

The present disclosure relates generally to communications, and more particularly to communication methods and related devices and nodes.

### BACKGROUND

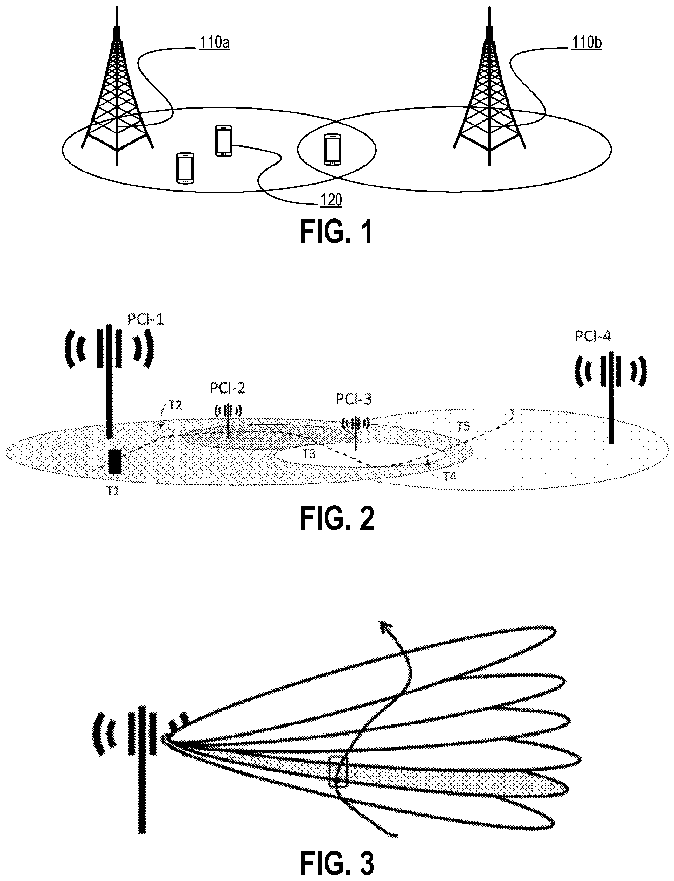

FIG. 1 illustrates an example of a 5th Generation ("5G") network (also referred to as a new radio ("NR") network) including a pair of network nodes 110a-b (e.g., 5G base stations ("gNB")) and multiple communication devices 120 (also referred to as user equipment ("UE")).

Document US 2020 / 0 351 005 A1 may be construed to disclose a base station that may identify an association between a set of physical cell identifiers (PCIs) identifying different transmission reception points (TRPs) and a set of transmission configuration indicator (TCI) states for a user equipment (UE). The base station may transmit a TCI state and PCI association indication to the UE. The UE may receive a downlink transmission using a receive beam associated with a TCI state, and may identify a PCI of the set of PCIs to use to decode the received downlink transmission. In cases where the TCI state used to receive the downlink transmission is associated with multiple PCIs, the UE may select a default PCI from the multiple PCIs, and may decode the received transmission accordingly. The UE may receive reference signals from one or more of the serving TRPs and may identify a PCI to use to decode the received reference signals.

Document US 2020 / 0 112 886 A1 may be construed to disclose techniques for preconfiguring transmission configuration indication (TCI)-states at a user-equipment (UE) to reduce handover latency. There is a method for wireless communication. The method generally includes receiving, at a UE, a message indicating a first TCI-state for a current serving base station (BS) and a second TCI-state for a target BS, performing handover to the target BS, and activating the second TCI-state for the target BS after the handover.

Document "Considerations on the enhancement of multi-beam operation", Sony, 3GPP draft R1-2008346, may be construed to disclose an evaluation of enhancement of multi-beam operation. The following proposals were made. Proposal 1: Support SRS for beam management configured in unified TCI to serve as a source RS for determining DL Rx beam at UE. Proposal 2: To maintain the flexibility of DL and UL beam indication, support separate unified TCI state pools (Alt. 2-2) for DL and UL beam indication. Proposal 3: For inter-band CCs, a common beam management procedure, including TCI states across bands, should be considered for data/control, DL/UL, multiple BWPs, multiple TRPs and multiple UE panels. Proposal 4: The UE capabilities reporting related to simultaneously steering in the same direction beams belonging to CCs in different bands should be considered. Proposal5: For the optimization of TCI states across bands, the polarization property of beams should be considered. Proposal 6: Investigate and specify (if the overall performance including overhead, latency and flexibility, reliability can be justified) the DCI based TCI state updating for DL and UL channels/signals. Proposal 7: Study and specify (if necessary) the L1/L2-centric approach for inter-cell mobility: incorporate/associate PCI with unified TCI state for DL beam management; and incorporate/associate PCI with unified TCI state or Spatial Relation for UL beam management. Proposal 8: RAN1 studies and specifies if necessary the L1-event based TCI state automatic activation from non-serving cell. Proposal 9: A panel ID either explicitly or implicitly combined with unified TCI or Spatial Relation can be used for UL panel selection. Proposal 10: Confirm the working assumption on panel selection for PUSCH/PUCCH/SRS and include PRACH with its conditions FFS. Proposal 11: For UE supporting beam correspondence without UL beam sweeping, RAN1 should study and, if necessary, specify MPE-aware beam reporting. Proposal 12: For UE supporting beam correspondence with the aid of UL beam sweeping, RAN1 should specify UE behavior on MPE-aware UL beam sweeping. Proposal 13: RAN1 supports (CAT1.) the UE reporting associated with an MPE and/or a potential/anticipated MPE event. Proposal 14: Associate the P-MPR values with the spatial relation for UL transmission to mitigate the coverage loss due to the MPE. Proposal 15: Introduce a panel-specific P-MPR reporting associated to a panel ID. Proposal 16: To avoid UL MPE issue, it would be beneficial for RAN1 to study and, if necessary, specify the mechanism of UE triggered UL beam/panel switch. Proposal 17: We suggest that definition of a UE panel and the related properties are addressed prior to further advancing discussions related to UE panel enhancements. Proposal 18: A beam can be defined as a spatial filtering associated with one or two antenna ports carrying one or two layers separated in the polarization domain. Proposal 19: RAN1 needs to study and specify (if necessary) whether additional signaling is necessary when a beam can support up to two independent layers separated by polarization.

Document 3GPP TS 38.321 V16.2.1 may be construed to disclose details on the NR MAC protocol.

Document "3 types of HO in NR", Huawei et al., 3GPP draft R2-1802471 may be construed to disclose an evaluation on the HO types: 1) legacy LTE like handover; 2) HO with no PDCP anchor change/reset and 3) HO with only PDCP anchor change/reset while no RLC (and MAC) layer re-establishment is involved. Proposal 1: Allow RRC connection reconfiguration without including PDCP configuration in the case of type 2 handover. Proposal 2: Retransmission of PDCP PDUs after type 2 handover follows the LTE baseline behavior. Consider if fast retransmission schemes offer a worthwhile benefit over this baseline. Proposal 3a: Design NR solely security key change process as Type 3 handover. Proposal 3b: Design NR PCell 0ms interruption switch by employing Type 3 handover in a DC architecture.

### Proposal 4: Agree the following L2 handling for type 3 HO (i.e. HO with 0ms interruption time)

| **HO Type** | **DRB in RLC AM** | **DRB in RLC UM** | **SRB** |
|---|---|---|---|
| Type 3 HO | Key change, No RLC re-establishment, (No MAC reset) | Key change, No RLC re-establishment, (No MAC reset) | Key change, No RLC re-establishment, (No MAC reset) |

### Proposal 5: Adopt the TP based on the following summary for the three type of HOs into stage 2 TS38.300

| **HO Type** | **DRB in RLC AM** | **DRB in RLC UM** | **SRB** |
|---|---|---|---|
| Type 1 HO | Key change, Data Recovery, RLC re-establishment | Key change, RLC re-establishment | Key change, RLC re-establishment |
| Type 2 HO | No Key change, Data Recovery, RLC re-establishment | No Key change, RLC re-establishment | No Key change, RLC re-establishment |
| Type 3 HO | Key change, No RLC re-establishment , (No MAC reset) | Key change, No RLC re-establishment, (No MAC reset) | Key change, No RLC re-establishment, (No MAC reset) |

### SUMMARY

According to a first aspect of the present disclosure, there is provided a method of operating a communication device configured with a plurality of physical cell identifiers, PCIs, for a mobility procedure, a plurality of transmission configurations, and one or more cells, each cell operating in a same serving frequency and each cell associated with one or more PCIs. The method comprises receiving an indication of a transmission configuration to be activated, from the plurality of transmission configurations, that is associated with a non-serving cell or a non-serving PCI, from a network node; and determining to perform a media access control, MAC, reset operation based on the transmission configuration to be activated.

According to a second aspect of the present disclosure, there is provided a method of operating a network node in a communications network with a communication device that is configured with a plurality of physical cell identifiers, PCIs, for a mobility procedure, a plurality of transmission configurations, and one or more cells, each cell operating in a same serving frequency and each cell associated with one or more PCIs. The method comprises transmitting an indication of a transmission configuration to be activated from the plurality of transmission configurations that is associated with a non-serving cell or a non-serving physical cell identifier, PCI, to the communication device; and transmitting an indication to the communication device to perform the MAC reset based on the transmission configuration to be activated.

According to a third aspect of the present disclosure, there is provided a communication device adapted to perform all steps of a method according to the first aspect.

According to a fourth aspect of the present disclosure, there is provided a network node (700) adapted to perform all steps of a method according to the second aspect.

According to a fifth aspect of the present disclosure, there are provided computer program products each comprising a non-transitory storage medium (605, 705) including either: program code to be executed by processing circuitry of a communication device, whereby execution of the program code causes the communication device to perform all steps of a method according to the first aspect; or program code to be executed by processing circuitry of a network node, whereby execution of the program code causes the network node to perform all steps of a method according to the second aspect.

Whenever in the following disclosure any of the above-stated aspects (corresponding to the independent claims) is disclosed as "optional" (e.g., due to usage of conjunctive terms, such as "can", "may", "should", etc.), it is nevertheless to be read as "mandatory".

### BRIEF DESCRIPTION OF THE DRAWINGS

Hereinabove and in the following, "examples" pertain to principles underlying the claimed subject-matter and/or being useful for understanding the claimed subject-matter, while "embodiments" pertain to the claimed subject-matter within the claim scope. The accompanying drawings, which are included to provide a further understanding of the disclosure and are incorporated in and constitute a part of this application, illustrate certain non-limiting embodiments of inventive concepts. In the drawings:
FIG. 1 is a schematic diagram illustrating a wireless communications network according to an example;
FIG. 2 is a schematic diagram illustrating a wireless communications network in which a communication device (sometimes referred to herein UE or wireless device) travels between different cells according to an example;
FIG. 3 is a schematic diagram illustrating a wireless communications network in which a UE travels between different beams according to an example;
FIG. 4 is a signal flow diagram illustrating determining whether to perform a media access control ("MAC") reset based on grouping identifiers ("IDs") according to an example;
FIG. 5 is a signal flow diagram illustrating determining whether to perform a MAC reset based on an added field in the MAC control element ("CE") according to an example;
FIG. 6 is a block diagram illustrating a communication device according to an embodiment of the present disclosure;
FIG. 7 is a block diagram illustrating a radio access network ("RAN") node according to an embodiment of the present disclosure;
FIG. 8 is a flow chart illustrating examples of operations of a communication device according to and embodiment of the present disclosure; and
FIG. 9 is a flow chart illustrating examples of operations of a network node according to an embodiment of the present disclosure.

Whenever in this description an "embodiment" is described, reference is to be made to the above figure list to determine whether this is to be read as "embodiment" or "example".

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter, which is defined by the appended claims.

In Rel-17, the third generation partnership project ("3GPP") is going to standardize what is called so far layer 1/layer 2 ("L1/L2") centric inter-cell mobility (or L1-mobility, inter-physical cell identifier ("PCI") transmission configuration indicator ("TCI") state change/update/modification. This is justified in the Work Item Description ("WID") RP-193133 (further enhancements on multiple input multiple output ("MIMO") for NR) by the fact that while Rel-16 manages to offer some reduction in overhead and/or latency, high-speed vehicular scenarios (e.g., a communication device traveling at high speed on highways) at FR2 require more aggressive reduction in latency and overhead (not only for intra-cell, but also for L1/L2 based inter-cell mobility).

Even though 3GPP has not decided how a L1/L2 based inter-cell mobility should be standardized, the understanding for the purpose of this specification is that the UE receives a L1/L2 signaling (instead of radio resource control ("RRC") signaling) indicating a transmission configuration indicator ("TCI") state (e.g. for physical downlink control channel ("PDCCH")) possibly associated to an synchronization signal block ("SSB") whose PCI is not necessarily the same as the PCI of the cell the UE has connected to e.g. via connection resume or connection establishment. Moreover, it may be the case that the frequency band and/or SSB absolute radio-frequency channel number ("ARFCN") of the current serving cell is also changed during the L1/L2 based inter-cell mobility procedure.

FIG. 2 is a schematic diagram illustrating an example of a wireless communications network in which a UE travels between different cells.

In some embodiments, a L1/L2 based inter-cell mobility procedure can be interpreted as a beam management operation expanding the coverage of multiple SSBs associated to multiple PCIs (e.g., possibly associated to the same cell or different cells), possibly being an inter-frequency beam management.

With the L1/L2 based inter-cell mobility procedurethere is two types of mobility for the UE. The layer 3 ("L3") mobility which is to/from these L1/L2 mobility clusters and the L1/L2 mobility within the cluster.

The L3 mobility is based on Cell defining SSB ("CD-SSB"). CD-SSB means that for a special cell ("spCell") there is one SBB on sync raster which is configured for the UE as the anchor for the cell. To change the CD-SSB, L3 mobility procedure (reconfig with sync) is needed. The PCI for the target cell SSB (referred to as phyCellld), or the serving cell after handover ("HO") (or initial access) is given in an information element ("IE") referred to as ServingCellConfigCommon. Then, depending whether the HO is intra or inter-frequency HO, the sync raster location may be given in an IE referred to as frequencylnfoDL.

For L3 mobility procedures there is always a media access control ("MAC") reset.

The L1/L2 based inter-cell mobility is as default based on L1 channel state information ("CSI")-measurements as it follows the existing beam management procedures.

Beam management in Release 15 NR was designed for a situation where multiple beams cover one cell. Due to the smaller coverage area of these narrow beams, it could be anticipated that a communication device would change beam more frequently than it changes cells. To reduce the signaling load for the beam switches, it was decided that RRC signaling would not be required to facilitate such changes. Instead, signaling solution based on Multiple MAC Control Element ("CE") or downlink control information ("DCI") have been introduced for beam management / intra-cell mobility. This is illustrated in FIG. 3.

Three examples of sub-functionality to support beam management are the following: layer 1 reference signal received power ("L1-RSRP") reporting on SSB and channel state information reference signal ("CSI-RS"); MAC CE based activation/deactivation updates of beam indications, so-called Quasi-Co-Location ("QCL") source, explained in the following in more details); and Beam failure recovery/radio link monitoring/beam failure detection.

As these functionalities were designed to handle mobility without RRC involvement, they were limited to intra-cell operation. Various embodiments herein may focus on the functionality related to the MAC CE based updates of QCL source, i.e., beam indications.

Beam indications, QCL source, and TCI states are discussed now.

Several signals can be transmitted from the same base station antenna from different antenna ports. These signals can have the same large-scale properties, for instance in terms of Doppler shift/spread, average delay spread, or average delay, when measured at the receiver. These antenna ports are then said to be QCL.

The network can then signal to the communication device that two antenna ports are QCL so that the communication device interprets that signals from these will have some similar properties. If the communication device knows that two antenna ports are QCL with respect to a certain parameter (e.g., Doppler spread), the communication device can estimate that parameter based on a reference signal transmitted one of the antenna ports and use that estimate when receiving another reference signal or physical channel the other antenna port. Typically, the first antenna port is represented by a measurement reference signal such as a CSI-RS (sometimes referred to as a source RS) and the second antenna port is a demodulation reference signal ("DMRS") (sometimes referred to as a target RS) for physical downlink shared channel ("PDSCH") or PDCCH reception.

For instance, if antenna ports A and B are QCL with respect to average delay, the communication device can estimate the average delay from the signal received from antenna port A (sometimes referred to as the source RS) and assume that the signal received from antenna port B (sometimes referred to as a target RS) has the same average delay. This is useful for demodulation since the communication device can know beforehand the properties of the channel when trying to measure the channel using the DMRS, which may help the communication device in, for example, selecting an appropriate channel estimation filter.

Information about what assumptions can be made regarding QCL is signaled to the communication device from the network. In new radio ("NR"), four types of QCL relations between a transmitted source RS and transmitted target RS were defined:
∘ Type A: {Doppler shift, Doppler spread, average delay, delay spread}
∘ Type B: {Doppler shift, Doppler spread}
∘ Type C: {average delay, Doppler shift}
∘ Type D: {Spatial Rx parameter}

QCL type D was introduced to facilitate beam management with analog beamforming and is known as spatial QCL. There is currently no strict definition of spatial QCL, but the understanding is that if two transmitted antenna ports are spatially QCL, the communication device can use the same receive ("Rx") beam to receive them. This is helpful for a communication device that uses analog beamforming to receive signals, since the communication device needs to adjust its Rx beam in some direction prior to receiving a certain signal. If the communication device knows that the signal is spatially QCL with some other signal it has received earlier, then it can safely use the same Rx beam to also receive this signal. In some examples, for beam management, the discussion mostly revolves around QCL Type D, but it can also be necessary to convey a Type A QCL relation for the RSs to the communication device, so that it can estimate all the relevant large-scale parameters.

This can be achieved by configuring the communication device with a CSI-RS for tracking ("TRS") for time/frequency offset estimation. To be able to use any QCL reference, the communication device would have to receive it with a sufficiently good signal-to-interference-plus-noise ratio ("SINR"). In many cases, this means that the TRS has to be transmitted in a suitable beam to a certain communication device.

The concept of a TCI state is associated with the concept of a QLC source. Each of the M states in the list of TCI states can be interpreted as a list of M possible beams transmitted in the downlink from the network and/or a list of M possible TRPs used by the network to communicate with the communication device. The M TCI states can also be interpreted as a combination of one or multiple beams transmitted from one or multiple TRPs.

Each TCI state includes the previously described QCL information (e.g., one or two source downlink RS), where each source RS is associated with a QCL type. For example, a TCI state can include a pair of reference signals, each associated with a QCL type (e.g., two different CSI-RSs {CSI-RS1, CSI-RS2} are configured in the TCI state as {qcl-Type1,qcl-Type2} = {Type A, Type D}). The UE can derive the Doppler shift, Doppler spread, average delay, delay spread from CSI-RS1, and Spatial Rx parameter (e.g., the Rx beam to use) from CSI-RS2. In terms of RRC signaling, a TCI state is represented by an IE sometimes referred to as a TCI-State.

In a TCI-State IE definition, there is a field called cell. According to the definition in TS 38.331, the field called cell in the QCL-Info configuration (i.e. cell field of IE ServCelllndex) is the communication device's serving cell in which the RS that is the QCL source is being configured. If the field is absent, it applies to the serving cell in which the TCI-State is configured (i.e. the special cell ("spCell") of the cell group, not an indexed SCell). The RS can be located on a serving cell other than the serving cell in which the TCI-State is configured only if the qcl-Type is configured as type D (see TS 38.214 section 5.1.5).

In this case, it has been argued in R1-1902528 "Lower-layer mobility enhancements" that the only thing that is needed for the communication device to be able to start receiving data on the physical layer in the target cell is that the QCL source is updated: this would enable the communication device to align to the target cell in an indicated direction to demodulate the bits and decode the data.

As mentioned above, the QCL source is included in the TCI-state. The TCI state includes pointers to reference signal(s). The reference signals are implicitly associated with a serving cell via a serving cell integer index: hence, in Rel-15, it is only possible to change QCL source to reference signals transmitted within a serving cell (SpCell or associated SCell within that SpCell group); it is not possible to change the QCL source to a reference signal in a non-serving cell.

To be able to use this functionality, it has been proposed in R1-1902528 "Lower-layer mobility enhancements" to introduce an identifier of the non-serving cell in the QCL-info. The identifier of the non-serving cell can be the PCI.

If a PCI would be introduced in the QCL-info, the network ("NW") could update the QCL source to an RS in a non-serving cell. Once the indication command takes effect, the NW can directly start transmitting data over PDSCH from the new cell. Since the procedure is synchronized, the NW and the communication device have the same understanding of when the updated configuration takes effect. Thus, the interruption in data communication can be eliminated.

A MAC reset is performed at the MAC entity at the communication device and can be triggered by the upper layers in different situations, such as when a handover is performed (e.g., upon reception of an RRCReconfiguration including a Reconfiguration with Sync). The reset of MAC includes a set of actions such as stopping timers, flushing of buffers, etc., as specified in TS 38.331. Agreements have been made in Release 16 and 17 concerning the feature.

During Release 16 agreements were made for multiTRP operation which is closely linked to L1 mobility as each of the PCIs in FIG. 2 can be seen as a TRP. The agreements included: 1) RAN2 assumes that also in "non-ideal backhaul" scenarios, transmission from two TRPs is always slot/frame/SFN-aligned; and 2) mPDCCH mTRP operation is supported via a single shared MAC entity.

For L3 mobility procedure, i.e. for a handover (SpCell change) /reconfiguration with sync (e.g., a primary cell ("PCell") or a primary secondary cell ("PSCell") change) the communication device always performs a MAC reset (e.g., higher layers trigger the MAC reset and the MAC entity at the communication device perform actions upon the trigger) as part of the procedure.

In Rel-17, with the introduction of L1/L2 based inter-cell mobility, the network should be able to indicate to the communication device, via L1/L2 signaling, a TCI state (e.g., by indicating a TCI identifier ("ID") configured via RRC) whose QCL source is associated to a non-serving cell, i.e. a cell different from a serving cell the communication device is connected to, like the PCell. One of the goals of introducing L1/L2 based inter-cell mobility is to improve service continuity and reduce interruption time as much as possible, i.e., in as many protocol layers as possible. Hence, performing the MAC reset for every L1/L2 based inter-cell mobility would increase the overhead in terms of latency as experienced by the UE. The MAC reset aspect has not been discussed earlier in context of L1 mobility.

It should be noted that the terms serving and non-serving cell have possibly alternative meaning to legacy interpretation. This is because of the formulation of the work item description for Rel-17 MIMO uses the term non-serving cell in an undefined way. Some embodiments may refer to actual non-serving cell, to a plurality of serving cells configured for the communication device that are interpreted differently from carrier aggregation configuration, or to an additional SSB configured in a serving cell configuration which has a different PCI than the cell defining SSB of that serving cell.

Various embodiments herein define when a MAC reset is performed for L1 mobility. With the diverse definitions, there are options for how the L1 mobility is designed. In some procedures, the communication device does not need to perform the MAC reset upon every L1 mobility and does so only conditionally, thus increasing the gains in terms of latency at L1 mobility without MAC reset.

One of the advantages to add this flexibility is that the communication device can be configured with non-serving cells associated to a TRP in non-ideal backhaul with the TRP associated to a serving cell and/or non-serving cell associated to a different distributed unit ("DU") than the DU of the serving cell.

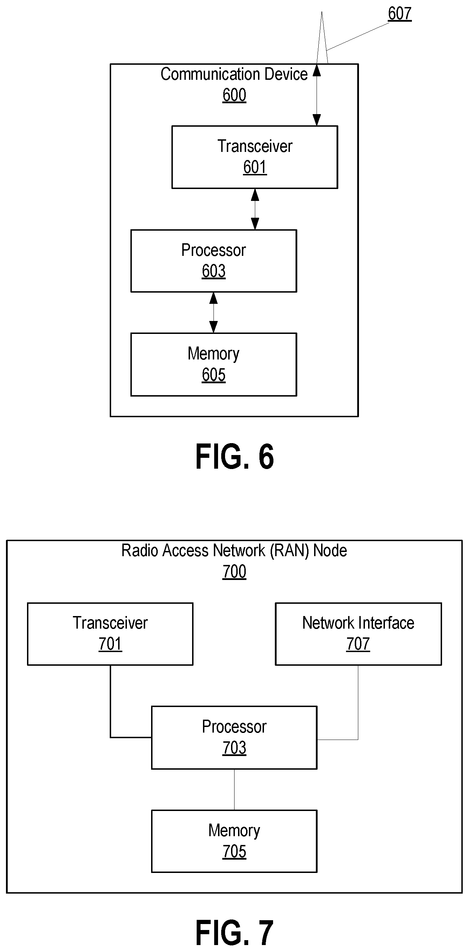

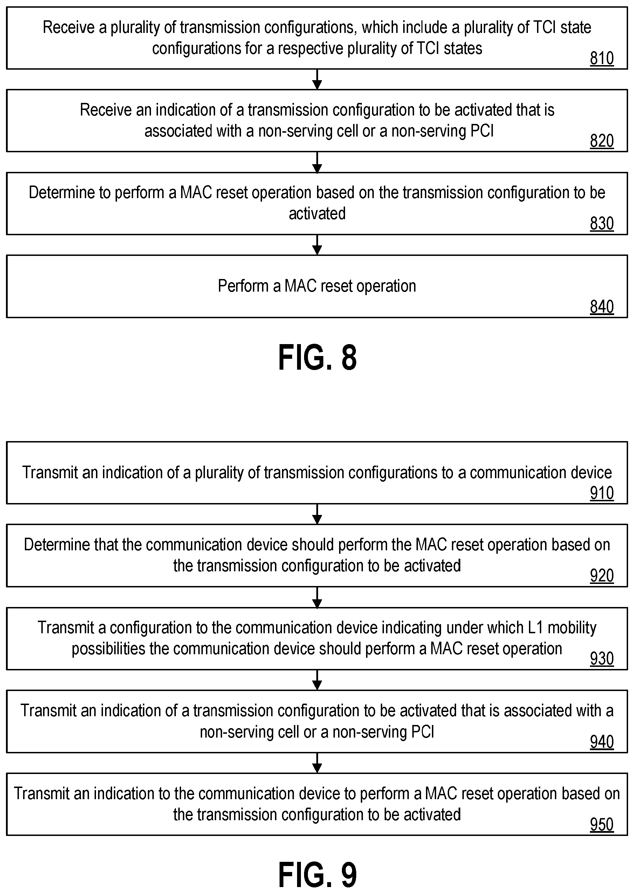

FIG. 6 is a block diagram illustrating elements of a communication device 600 (also referred to as a wireless device, mobile terminal, a mobile communication terminal, a wireless communication device, a wireless terminal, mobile device, a wireless communication terminal, a UE", a user equipment node/terminal/device, etc.) configured to provide wireless communication according to embodiments of inventive concepts. As shown, communication device 600 may include an antenna 607 and transceiver circuitry 601 (also referred to as a transceiver) including a transmitter and a receiver configured to provide uplink and downlink radio communications with a base station(s) of a radio access network. Communication device 600 may also include processing circuitry 603 (also referred to as a processor) coupled to the transceiver circuitry, and memory circuitry 605 (also referred to as memory) coupled to the processing circuitry. The memory circuitry 605 may include computer readable program code that when executed by the processing circuitry 603 causes the processing circuitry to perform operations according to embodiments disclosed herein, for example, the operations of FIG. 8. According to other embodiments, processing circuitry 603 may be defined to include memory so that separate memory circuitry is not required. Communication device 600 may also include an interface (such as a user interface) coupled with processing circuitry 603, and/or communication device 900 may be incorporated in a vehicle.

As discussed herein, operations of communication device 600 may be performed by processing circuitry 603 and/or transceiver circuitry 601. For example, processing circuitry 603 may control transceiver circuitry 601 to transmit communications through transceiver circuitry 601 over a radio interface to a radio access network node (also referred to as a base station) and/or to receive communications through transceiver circuitry 601 from a RAN node over a radio interface. Moreover, modules may be stored in memory circuitry 605, and these modules may provide instructions so that when instructions of a module are executed by processing circuitry 603, processing circuitry 603 performs respective operations.

FIG. 7 is a block diagram illustrating elements of a radio access network RAN node 700 (also referred to as a network node, base station, eNodeB/eNB, gNodeB/gNB, etc.) of a Radio Access Network ("RAN") configured to provide cellular communication according to embodiments of inventive concepts. As shown, the RAN node may include transceiver circuitry 701 (also referred to as a transceiver) including a transmitter and a receiver configured to provide uplink and downlink radio communications with mobile terminals. The RAN node may include network interface circuitry 707 (also referred to as a network interface) configured to provide communications with other nodes (e.g., with other base stations) of the RAN and/or core network CN. The network node may also include processing circuitry 703 (also referred to as a processor) coupled to the transceiver circuitry, and memory circuitry 705 (also referred to as memory) coupled to the processing circuitry. The memory circuitry 705 may include computer readable program code that when executed by the processing circuitry 703 causes the processing circuitry to perform operations according to embodiments disclosed herein. According to other embodiments, processing circuitry 703 may be defined to include memory so that a separate memory circuitry is not required.

As discussed herein, operations of the RAN node may be performed by processing circuitry 703, network interface 707, and/or transceiver 701. For example, processing circuitry 703 may control transceiver 701 to transmit downlink communications through transceiver 1001 over a radio interface to one or more communication devices and/or to receive uplink communications through transceiver 701 from one or more communication devices over a radio interface. Similarly, processing circuitry 703 may control network interface 707 to transmit communications through network interface 707 to one or more other network nodes and/or to receive communications through network interface from one or more other network nodes. Moreover, modules may be stored in memory 705, and these modules may provide instructions so that when instructions of a module are executed by processing circuitry 703, processing circuitry 703 performs respective operations, such as the operations of FIG. 9.

This disclosure uses the terminology in the NR specification as examples and refer to the Rel-17. However, this disclosure may also be applicable in the context of 6^{th} generation ("6G") research, which is often label as Distributed-MIMO ("D-MIMO") and cell-less mobility. This may also be relevant for other multi-beam transmission schemes, such as in Tera Hertz communications system, which may be the case in some frequencies possibly allocated to 6G and/or 5^{th} generation ("5G") enhancements.

The term "beam" can correspond to a reference signal that is transmitted in a given direction. For example, if may refer to an SS/PBCH Block or L3 configured CSI-RS in the following sub-section. During a half-frame, different SSBs may be transmitted in different spatial directions (i.e. using different beams, spanning the coverage area of a cell). That corresponds to different SSBs meaning different beams.

The term "TCI state" may also be considered as a synonym for beam in the sense that an indication of a TCI state can correspond to an indication of a beam, and/or an SSB index and/or a CSI-RS index.

The term "QCL" may also be considered as a synonym for beam in the sense that an indication of a QCL source associated to a TCI state can correspond to an indication of a beam, and/or an SSB index and/or a CSI-RS index.

The term PCI and/or PCI of an SSB cancorrespond to the PCI encoded by a Primary Synchronization Sequence/Signal ("PSS") and an a Secondary Synchronization Sequence/Signal ("SSS") that are comprised in an SSBas defined in TS 38.211.

The "cells" or a "set of cells" with which the communication device can be configured to perform L1/L2 based inter-cell mobility may be called a set of intra-frequency neighbour cells (the communication device can perform measurements on and can perform a handover/reconfiguration with sync to), or a set of intra-frequency non-serving cells or simply a set of non-serving cells. These may be a set of inter-frequency neighbors that are non-serving cells wherein their SSB's frequency location (e.g. SSB ARFCN) are not in the same frequency location as a serving cell SSB frequency location (i.e. different ARFCN).

The terms CORESET and PDCCH configuration are used interchangeably to indicate a control channel configuration, including an indication of frequency and time locations the communication device monitors for scheduling from the network, e.g. when it is in Connected state. A CORESET can be defined as a time/frequency control resource set in which to search for downlink control information (see TS 38.213, clause 10.1).

The L1/L2 based inter-cell mobility refers to a procedure where the communication device change cells (e.g. changes SpCell, like PCell change or PSCell change) upon reception of a L1 and /or L2 signaling, such as upon the reception of a MAC CE.

Some embodiments herein focus on how to handle MAC reset for L1 mobility including two approaches which give the underlying assumptions for the embodiments that follow.

. Even though the term "L1/L2 based inter-cell mobility" has the term "inter-cell", a fundamental aspect is that the configuration of the communication device (e.g., the serving cell configuration of the communication device) can have more than one PCI associated to it, and for that there are at least 2 approaches (or solutions) to create that association:
Approach 1 - Intra-cell multi-PCI L1/L2 based inter-cell mobility refers to the case where the same serving cell configuration is associated to more than one PCI (e.g. a TCI state configuration within ServingCellConfig can be associated to a PCI, wherein that can be different from the PCI in ServingCellConfigCommon). For a secondary node ("SN") Addition (or PSCell Addition) and/or SN Change (or PSCell Change) and/or, as proposed by the some embodiments of Approach 1, the implication is that the SCG configuration the communication device receives (e.g. as an nr-scg within an MN RRCReconfiguration) contains the L1/L2 based inter-cell mobility configuration (e.g. ServingCellConfig with TCI states associated to PCI(s) that can be different from the PCI in ServingCellConfigCommon, and can be associated to non-serving cells). Currently, a communication device can receive a MAC CE from the network to indicate the TCI state to be associated to a given PDCCH configuration, while the PDCCH TCI state association can be provided via DCI. Upon reception, the communication device knows which TCI state (e.g. in which downlink beam PDCCH is being transmitted and should be monitored/received) is associated to a given PDCCH configured to be monitored. In other words, in a system where SS/PBSH Blocks are transmitted in different beams for a given cell with a given PCI, a TCI indication for a given PDCCH configurations triggers the communication device to monitor PDCCH in a given beam of that cell associated to its PCI, in this case, a beam / SSB of the serving cell where that TCI state is configured.

However, for this approach, in the context of L1/L2 based inter-cell mobility, for a given serving cell configuration, there can be a different PCI in a TCI state configuration compared to the PCI in ServingCellConfigCommon, e.g. PCI-1, which is an additional PCI e.g. PCI-2. In that case, the communication device receiving the MAC CE needs to determine the PCI associated to the indicated TCI, to determine the SSB (or CSI-RS) associated, hence, determine the downlink beam. If it receives a TCI with PCI indicating PCI-2, for example, the communication device needs to monitor PDCCH in a beam / SSB associated to PCI-2. The different PCIs (not the one in ServingCellConfigCommon) can be associated to non-serving cell(s).

Another way to configure the communication device is that in serving cell config (e.g. ServingCellConfig) communication device is configured with SSB sets that has other PCI associated to it. These SSB sets would have an index and in TCI state configuration an index of SSB set is referred to together with exact SSB beam index from that SSB set. It is possible these sets will be named differently to reflect "inter PCI candidates", thus SSB set index is an example of an RRC configuration specific ID given to the PCI(SSB set) to be used in the L1/L2 based inter-cell mobility in communication device's current RRC configuration.

Approach 2 - Inter-cell multi-PCI L1/L2 based inter-cell mobility refers to the case where the communication device has several serving cell configurations with respective PCIs associated but the TCI state may refer to other cell PCIs (e.g. other serving cell or, even a non-serving cell the communication device can move to with L1/L2 based inter-cell mobility). For an SN Addition (or PSCell Addition) and/or SN Change (or PSCell Change) and/or, as proposed by the method, the implication is that the SCG configuration the communication device receives contains a configuration prepared by a target node (e.g. a target gNodeB) that is associated to more than one cell (e.g. TCI state configurations can be associated to multiple cells' PCIs e.g. TCI state Id=1 associated to PCI-x of cell A, TCI state Id=2 associated to PCI-y of cell B, etc.). These multiple cells can be a serving cell and/or non-serving cell(s).

Currently, a communication devicecan assume that the QCL source of a configured TCI state is a RS associated to the serving cell's single configured PCI (i.e. the PCI in ServingCellConfigCommon). However, in Approach 2, the communication device can be configured with a different PCI in the TCI state configuration wherein these PCIs are considered to be associated with different cells e.g. to non-serving cells. In that case, the communication device can have different serving cell configurations for these PCIs e.g. a set of ServingCellConfigCommon(s) that may be switched upon the change of serving cell via MAC CE.

In other words, the communication device is configured with a list of TCI states meaning that it is configured with a list of additional cells (e.g. non-serving cells configured for L1/L2 based inter-cell mobility), as the different PCIs are PCIs of different cells (each TCI state has its own PCI, but the same PCI may be used by multiple TCI states). These could be, for example, considered as some kind of serving cells e.g. if these are all in the same frequency (like same ARFCN for their SSB) these could be considered as intra-frequency serving cells, where one is considered to be active at the time (except if some form of multi-TRP transmission is enabled). Or, alternatively, these could be considered as non-serving cells, wherein the communication device can perform L1/L2 based inter-cell mobility.

Notice that what is called "changing cell" or "inter-cell" herein does not have the same meaning as changing serving cell as in legacy.

Operations of a communication device (implemented using the structure of the block diagram of FIG. 6 will now be discussed with reference to the flow chart of FIG. 8 according to some embodiments of inventive concepts. For example, modules may be stored in memory 605 of FIG. 6, and these modules may provide instructions so that when the instructions of a module are executed by respective communication device processing circuitry 603, processing circuitry 603 performs respective operations of the flow chart.

FIG. 8 illustrates an example of operations performed by a communication device that is configured with a plurality of PCIs for a mobility procedure, a plurality of transmission configurations, and one or more cells. Each of the cells can operate in a same serving frequency and each cell can be associated with one or more PCIs. In some examples, the mobility procedure is a Layer 1/Layer 2, L1/L2, based inter-cell mobility. In additional or alternative examples, the L1/L2 based inter-cell mobility includes a MAC control element, CE.

At block 810, processing circuitry 603 receives, via transceiver 601, a plurality of transmission configurations, which include a plurality of TCI state configurations, for a respective plurality of TCI states.

At block 820, processing circuitry 603 receives, via transceiver 601, an indication of a transmission configuration to be activated that is associated with a non-serving cell or a non-serving PCI. In some embodiments, receiving the indication of the transmission configuration to be activated that is associated with the non-serving cell or the non-serving PCI includes receiving an indication of a TCI state associated with a TCI state configuration of the plurality of TCI state configurations.

In additional or alternative embodiments, receiving the indication of the transmission configuration to be activated comprises receiving an indication of the second group ID. In some examples, radio resource control, RRC, configurations indicate a grouping of serving cell configurations and/or non-serving cell configurations among which layer 1, L1, mobility may be performed.

In additional or alternative embodiments, the transmission configuration to be activated that is associated with the non-serving cell or the non-serving PCI includes an indication of a quasi-co-location, QCL, configuration. In some examples, the QCL configuration includes a reference signal configuration including at least one of a synchronization signal block, SSB, index and a channel state information reference signal, CSI-RS, index.

At block 830, processing circuitry 603 determines to perform a MAC reset operation based on the transmission configuration to be activated. In some embodiments, determining to perform the MAC reset operation based on the transmission configuration to be activated includes determining to perform the MAC reset based on determining that layer 1, L1, mobility occurred.

In additional or alternative embodiments, determining to perform the MAC reset operation includes determining that the communication device has moved from a first beam associated with a first group identifier, ID, to a second beam associated with a second group ID that is different than the first group ID.

In additional or alternative embodiments, the transmission configuration to be activated includes a field indicating that the communication device perform the MAC reset and determining to perform the MAC reset operation includes determining to perform the MAC reset operation based on the field.

In additional or alternative embodiments, determining to perform the MAC reset operation includes checking that an index in the transmission configuration to be activated is associated with the non-serving cell or non-serving PCI and determining to perform the MAC reset operation based on the index.

At block 840, processing circuitry 603 performs a MAC reset operation. In some embodiments, a communication device always performs a MAC reset when L1 mobility takes place.

Various operations from the flow chart of FIG. 8 may be optional with respect to some embodiments of communication devices and related methods. For example, block 840 of FIG. 8 may be optional.

In some embodiments, when a communication device is configured with the plurality of PCIs, the communication device is configured with additional SSB/PCls within the serving cell configuration which may be linked to the TCI states which are thereafter used for the L1 mobility by MAC CE signaling, the SSB/PCls are grouped such that MAC reset is performed when the L1 MAC CE based mobility moves the communication device from the beam of one group to the beam of another group. The grouping may be based on SSB belonging to the same PCI. The grouping may be based on existing index in RRC called CORESETid. The grouping may be with a new group ID.

In some embodiments, there is an added field in the MAC CE that is used to perform the L1 mobility that indicates to the communication device that the communication device needs to do a MAC reset for the MAC entity that the PCI associated to the TCI state belongs to. That field may be set or not set, depending whether the network wants the communication device to perform the MAC reset or not. In one alternative that is the same MAC entity, still considered to be associated to the same cell group but reset upon the L1 mobility.

In some embodiments, the use of the above embodiments depends on whether the SSB/PCIs linked to a TCI state that is indicated in the MAC CE used for L1 mobility belong to the same DU or different DUs. The network (e.g. the serving DU) may determine to set the indication to the communication device for the MAC reset in the MAC upon L1/L2 based inter-cell mobility if the network has included in the MAC CE an indication of a TCI state associated to a non-serving cell/ PCI that is associated to a different DU. Notice that the serving DU knows this based on information on its neighbor relation (which may be placed in the DU). The network (serving DU) may also determine to set the indication to the communication device for MAC reset in the MAC upon L1/L2 based inter-cell mobility if the network is aware that the target cell/ PCI (indicated implicitly by the included TCI state ID) is not time aligned with the current serving cell (so that upon MAC Reset the time alignment timers are stopped as a consequence of the MAC Reset).

In some embodiments, the network configures the communication device with the conditions upon which the communication device needs to perform the MAC reset. Such a configuration could be part of the TCI state configurations or explicitly configured outside of TCI state configurations (e.g., a direct RRC configuration).

In one example, for each possible TCI state change pair (i.e., original TCI state - new TCI state at TCI state change), the configuration indicates whether the MAC reset is required or not (as illustrated below).
- PCI 1, TCI state Id=12
   ∘ previous-TCI state Id-1 → perform MAC reset,
   ∘ previous- TCI state Id-13 → do not perform MAC reset
- PCI 7, TCI state Id=1
   ∘ previous- TCI state Id-12 → perform MAC reset,
   ∘ previous- TCI state Id-13 → perform MAC reset
- PCI 12, TCI state Id=13
   ∘ previous- TCI state Id-1 → perform MAC reset,
   ∘ previous- TCI state Id-12 → do not perform MAC reset

In this example, the communication device is considered to be initially served by PCI-1. The communication device then receives a MAC CE whose TCI state indicates TCI state id = 13, then the communication device realizes that the serving PCI has been switched to PCI-12 but the communication device also realizes that there is no need to perform the MAC reset as the transition from TCI state ID-12 to TCI state ID-13 does not require any MAC resetting operation. The communication device then receives a MAC CE whose TCI state indicates TCI state id = 1, then the communication device realizes that the serving PCI has been switched to PCI-7 and the communication device realizes that there is a need to perform the MAC reset as the transition from TCI state ID-13 to TCI state ID-1 needs the MAC resetting operation.

In another example, for each possible PCI change pair (i.e., original PCI - new PCI at TCI state change involving PCI changes), the configuration indicates whether the MAC reset is required or not (as illustrated below).
- PCI 1, TCI state Id=12
   ∘ previous-PCI-7 → perform MAC reset,
   ∘ previous-PCI-12 → do not perform MAC reset
- PCI 7, TCI state Id=1
   ∘ previous-PCI-1 → perform MAC reset,
   ∘ previous-PCI-12 → perform MAC reset
- PCI 12, TCI state Id=13
   ∘ previous-PCI-7 → perform MAC reset,
   ∘ previous-PCI-1 → do not perform MAC reset

In this example the communication device is considered to be initially served by PCI-1. The communication device then receives a MAC CE whose TCI state indicates TCI state id = 13, then the communication device realizes that the serving PCI has been switched to PCI-12 but the communication device also realizes that there is no need to perform the MAC reset as the transition from PCI-1 to PCI-12 does not require any MAC resetting operation. The communication device then receives a MAC CE whose TCI state indicates TCI state id = 1, then the communication device realizes that the serving PCI has been switched to PCI-7 and the communication device also realizes that there is a need to perform the MAC reset as the transition from PCI-12 to PCI-7 needs the MAC resetting operation.

In some embodiments, a communication device always performs a MAC reset when L1 mobility takes place.

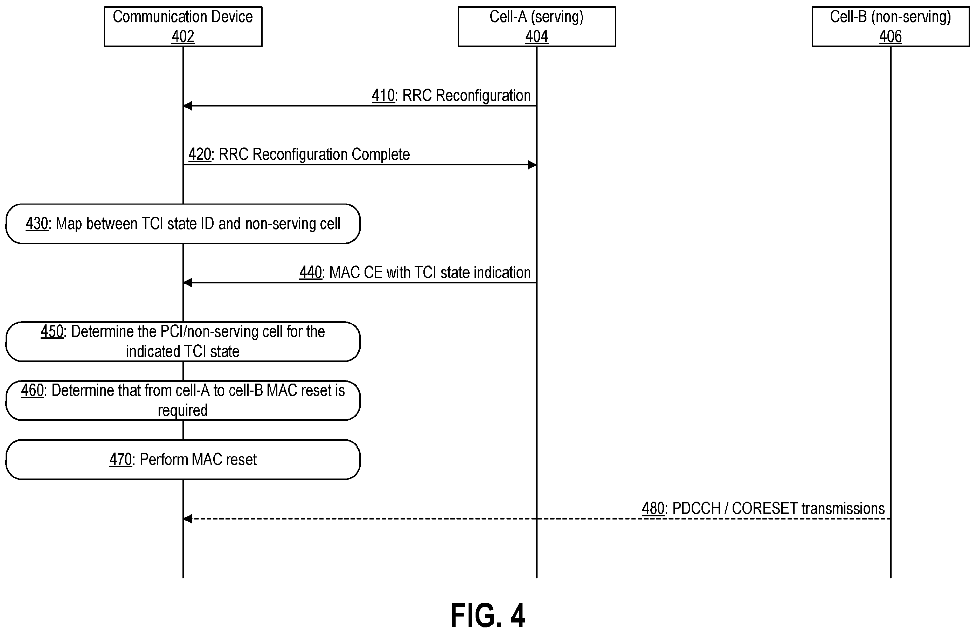

In some embodiments, as illustrated in FIG. 4, the RRC configuration groups the serving cell/non-serving cell configurations among which L1 mobility may be performed such that MAC reset is performed when the L1 MAC CE based mobility moves the communication device from the beam of one group to the beam of another group. The grouping may be based on SSB belonging to the same PCI. The grouping may be based on existing index in RRC called CORESETid. The grouping may be with a new group ID.

At operation 410, a RRC reconfiguration message is transmitted from a serving cell (Cell-A) 404 to the communication device 402. At operation 420, a RRC reconfiguration complete message is transmitted from the communication device 402 to the serving cell 404.

At operation 430, the communication device determines a mapping between a TCI state ID and a non-serving cell (Cell-B) 406. At operation 440, the serving cell 404 transmits a MAC CE with an indication of a TCI state to the communication device 402.

At operation 450, the communication device 402 determines the PCI and/or non-serving cell 406 for the indicated TCI state. At operation 460, the communication device 402 determines that when moving from cell-A 404 to cell-B 406, a MAC reset is required. At operation 470, the communication device 402 performs the MAC reset.

At operation 480, cell-B 406 transmits PDCCH / CORESET transmissions to the communication device 402.

The ServingCellConfigCommon IE could be used to configure a non-serving cell for the purpose of L1/L2 based inter-cell mobility. According to some embodiments of Approach 2, the non-serving cell configuration can also be associated to a reference, which can be the non-serving cell index (e.g. field nsCelllndex of IE NSCelllndex (see Table 1 below), which can be an integer to be later referred to in another configuration, such as in the TCI state configuration and/or within a list of TCI state configurations). The integer can be from 0 to a Max value (e.g. 8), depending on the maximum number of non-serving cells that can be configured for L1/L2 based inter-cell mobility. Then, in each of these it may be indicated if a L1 mobility should trigger a MAC reset or not.

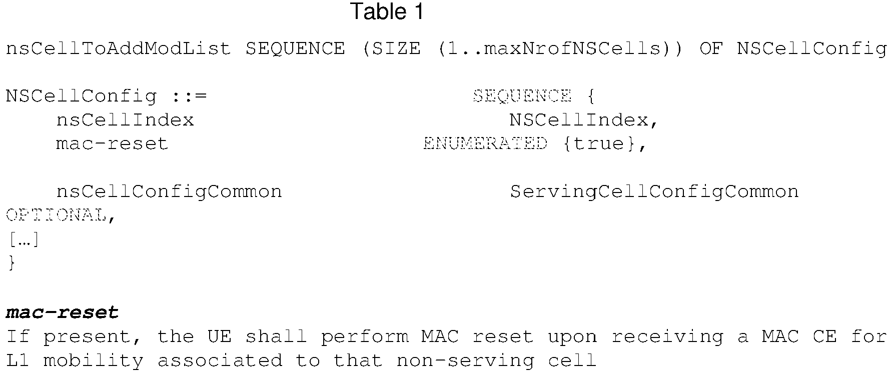

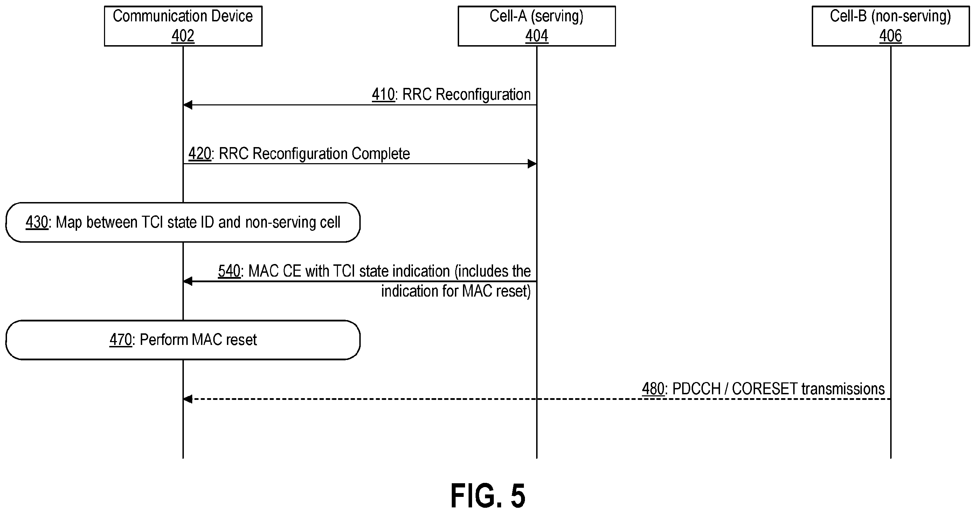

In another embodiment, as illustrated in FIG. 5, there is an added field in the MAC CE that is used to perform the L1 mobility that indicates to the communication device that the communication device needs to do a MAC reset for the MAC entity that serving cell is pointed/indicated in the MAC CE used for L1 mobility.

Similarly to FIG. 4, at operation 410, a RRC reconfiguration message is transmitted from a serving cell (Cell-A) 404 to the communication device 402. At operation 420, a RRC reconfiguration complete message is transmitted from the communication device 402 to the serving cell 404. At operation 430, the communication device determines a mapping between a TCI state ID and a non-serving cell (Cell-B) 406.

In contrast to FIG. 4, at operation 540, the serving cell 404 transmits a MAC CE with an indication of a TCI state (that includes the indication for a MAC reset) to the communication device 402.

As a result of receiving the indication to perform the MAC reset, the communication device 402 can avoid operations 450 and 460 of FIG. 4 and proceed to operation 470, which (similar to as in FIG. 4) includes the communication device 402 performing a MAC reset. At operation 480, cell-B 406 transmits PDCCH / CORESET transmissions to the communication device 402.

In some embodiments, the use of the above embodiments depends on whether the serving cell configuration that is pointed in the MAC CE used for L1 mobility belong to the same distributed unit or different distributed units.

In some embodiments, a pre-configuration-based indication is provided indicating whether the MAC reset is required at the time of L1 mobility. In one embodiment, the network pre-configures the communication device with the conditions upon which the communication device needs to perform the MAC reset. Such a configuration could be part of the TCI state configurations or explicitly configured outside of TCI state configurations (e.g., a direct RRC configuration).

Similarly to as Approach 1, in some examples, for each possible TCI state change pair (i.e., original TCI state - new TCI state at TCI state change), the configuration indicates whether the MAC reset is required or not.

Similarly to Approach 1, in some examples, for each possible PCI change pair (i.e., original PCI - new PCI at TCI state change involving PCI changes), the configuration indicates whether the MAC reset is required or not.

Network embodiments are described below.

Operations of a network node (implemented using the structure of the block diagram of FIG. 7 will now be discussed with reference to the flow chart of FIG. 9 according to some embodiments of inventive concepts. For example, modules may be stored in memory 705 of FIG. 7, and these modules may provide instructions so that when the instructions of a module are executed by respective RAN processing circuitry 703, processing circuitry 703 performs respective operations of the flow chart.

FIG. 9 illustrates an example of a network node in a communications network with a communication device that is configured with a plurality of PCIs for a mobility procedure, a plurality of transmission configurations, and one or more cells. Each cell can operate in a same serving frequency and be associated with one or more PCIs. In some embodiments, the mobility procedure is a layer 1/layer 2, L1/L2, based inter-cell mobility. In some examples, the L1/L2 based inter-cell mobility includes a MAC control element, CE.

At block 910, processing circuitry 703 transmits, via transceiver 701, an indication of a plurality of transmission configurations to a communication device. In some embodiments, the plurality of transmission configurations include a plurality of transmission configuration indicator, TCI, state configurations for a respective plurality of TCI states.

At block 920, processing circuitry 703 determines that the communication device should perform the MAC reset operation based on the transmission configuration to be activated. In some embodiments, determining that the communication device should perform the MAC reset operation includes determining to perform the MAC reset based on whether layer 1, L1, mobility occurred.

In additional or alternative embodiments, determining that the communication device should perform the MAC reset operation includes determining whether multiple synchronization signal block or PCI within a transmission configuration belong to a same distributed unit or different distributed units.

In additional or alternative embodiments, determining that the communication device should perform the MAC reset operation comprises determining that the communication device has moved from a first beam associated with a first group identifier, ID, to a second beam associated with a second group ID that is different than the first group ID. In some examples, processing circuitry 703 assigns group IDs to groups of serving cell and/or non-serving cell configuration based on synchronization signal blocks belonging to a same PCI and/or based on an existing index in radio resource control, RRC.

At block 930, processing circuitry 703 transmits, via transceiver 701, a configuration to the communication device indicating under which L1 mobility possibilities the communication device should perform a MAC reset operation.

At block 940, processing circuitry 703 transmits, via transceiver 701, an indication of a transmission configuration to be activated that is associated with a non-serving cell or a non-serving PCI. In some embodiments, transmitting the indication of the transmission configuration to be activated includes transmitting an indication of a TCI state associated with a TCI state configuration of the plurality of TCI state configurations.

In additional or alternative embodiments, transmitting the indication of the transmission configuration to be activated that is associated with the non-serving cell or the non-serving PCI includes transmitting an indication of a quasi-co-location, QCL configuration. In some examples, the QCL configuration comprises a reference signal configuration including at least one of a synchronization signal block, SSB, index and a channel state information reference signal, CSI-RS, index.

In additional or alternative embodiments, the transmission configuration to be activated includes a field indicating that the communication device perform the MAC reset.

At block 950, processing circuitry 703 transmits, via transceiver 701, an indication to the communication device to perform a MAC reset operation based on the transmission configuration to be activated.

Various operations from the flow chart of FIG. 9 may be optional with respect to some embodiments of network nodes and related methods. For example, blocks 920, 930, and 950 of FIG. 9 may be optional.

In some embodiments, network embodiments relate to the on the fly configuration of whether the MAC resetting is required at the time of L1 mobility.

In additional or alternative embodiments, a network node can transmit a plurality of TCI state configurations (at least one) wherein at least one of the TCI state configurations has a QCL configuration (e.g. a reference signal configuration e.g. an SSB index and/or a CSI-RS index) associated to at least one non-serving cell/non-serving frequency. The network node can further transmit a MAC CE indicating one of the configured TCI states and determining that the QCL source reference signal is associated to a non-serving cell/non-serving PCI. The network node can further transmit a MAC CE indicating whether the communication device needs to performs the MAC resetting or not.

In some embodiments, network embodiments relate to the pre-configuration of whether the MAC resetting is required at the time of L1 mobility.

In additional or alternative embodiments, a network node can transmit a plurality of TCI state configurations (at least one) wherein at least one of the TCI state configurations has a QCL configuration (e.g. a reference signal configuration e.g. an SSB index and/or a CSI-RS index) associated to at least one non-serving cell/non-serving frequency. The network node can further transmit a configuration (either via RRC based or a MAC configuration) indicating whether the communication device needs to perform the MAC resetting or not at different L1 mobility possibilities. The network node can further transmit a MAC CE indicating one of the configured TCI states and determining that the QCL source reference signal is associated to a non-serving cell/non-serving PCI.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are openended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that alternate implementations may exist within the scope of the appended claims.

## Claims

1. A method of operating a communication device configured with a plurality of physical cell identifiers, PCIs, for a mobility procedure, a plurality of transmission configurations, and one or more cells, each cell operating in a same serving frequency and each cell associated with one or more PCIs, the method comprising:
receiving (820) an indication of a transmission configuration to be activated, from the plurality of transmission configurations, that is associated with a non-serving cell or a non-serving PCI, from a network node; and
determining (830) to perform a media access control, MAC, reset operation based on the transmission configuration to be activated.

2. The method of Claim 1, further comprising:
receiving (810) the plurality of transmission configurations, which include a plurality of transmission configuration indicator, TCI, state configurations for a respective plurality of TCI states from the network node, and
wherein receiving the indication of the transmission configuration to be activated that is associated with the non-serving cell or the non-serving PCI comprises receiving an indication of a TCI state associated with a TCI state configuration of the plurality of TCI state configurations.

3. The method of Claim 1 or 2, wherein the transmission configuration to be activated that is associated with the non-serving cell or the non-serving PCI comprises an indication of a quasi-co-location, QCL, configuration,
wherein, optionally, the QCL configuration comprises a reference signal configuration including at least one of a synchronization signal block, SSB, index and a channel state information reference signal, CSI-RS, index.

4. The method of any of Claims 1 to 3, wherein:
(a) determining to perform the MAC reset operation based on the transmission configuration to be activated comprises determining to perform the MAC reset based on determining that layer 1, L1, mobility occurred; and/or
(b) determining to perform the MAC reset operation based on the transmission configuration to be activated comprises determining that the communication device has moved from a first beam associated with a first group identifier, ID, to a second beam associated with a second group ID that is different than the first group ID; and/or
(c) wherein the transmission configuration to be activated comprises a field indicating that the communication device perform the MAC reset, and wherein determining to perform the MAC reset operation comprises determining to perform the MAC reset operation based on the field; or determining to perform the MAC reset operation comprises: checking that a synchronization signal block, SSB, index or a channel state information reference signal, CSI-RS, index in the transmission configuration to be activated is associated with the non-serving cell or non-serving PCI; and determining to perform the MAC reset operation based on the SSB index or the CSI-RS index.

5. The method of Claim 4, feature group (b), wherein:
- receiving the indication of the transmission configuration to be activated comprises receiving an indication of the second group ID; or
- radio resource control, RRC, configurations indicate a grouping of serving cell configurations and/or non-serving cell configurations among which layer 1, L1, mobility may be performed.

6. The method of any of Claims 1 to 5, wherein:
- the method further comprising: performing (840) the MAC reset operation; and/or
- the mobility procedure is a Layer 1/Layer 2, L1/L2, based inter-cell mobility, wherein, optionally, the L1/L2 based inter-cell mobility comprises a MAC control element, CE.

7. A method of operating a network node in a communications network with a communication device that is configured with a plurality of physical cell identifiers, PCIs, for a mobility procedure, a plurality of transmission configurations, and one or more cells, each cell operating in a same serving frequency and each cell associated with one or more PCIs, the method comprising:
transmitting (940) an indication of a transmission configuration to be activated from the plurality of transmission configurations that is associated with a non-serving cell or a non-serving physical cell identifier, PCI, to the communication device; and
transmitting (950) an indication to the communication device to perform the MAC reset based on the transmission configuration to be activated.

8. The method of Claim 7, wherein:
(a) the method further comprises: transmitting (910) an indication of the plurality of transmission configurations to the communication device; and/or
(b) the plurality of transmission configurations comprise a plurality of transmission configuration indicator, TCI, state configurations for a respective plurality of TCI states, and wherein transmitting the indication of the transmission configuration to be activated comprises transmitting an indication of a TCI state associated with a TCI state configuration of the plurality of TCI state configurations; and/or
(c) transmitting the indication of the transmission configuration to be activated that is associated with the non-serving cell or the non-serving PCI comprises transmitting an indication of a quasi-co-location, QCL configuration; and/or
(d) the method further comprises: determining (920) that the communication device should perform the MAC reset operation based on the transmission configuration to be activated; and transmitting (930) a configuration to the communication device indicating under which L1 mobility possibilities the communication device should perform a media access control, MAC, reset operation.

9. The method of Claim 8, feature group (c), wherein the QCL configuration comprises a reference signal configuration including at least one of a synchronization signal block, SSB, index and a channel state information reference signal, CSI-RS, index.

10. The method of Claim 8, feature group (d), wherein:
(e) determining that the communication device should perform the MAC reset operation based on the indication of the transmission configuration to be activated comprises determining to perform the MAC reset based on whether layer 1, L1, mobility occurred; or
(f) determining that the communication device should perform the MAC reset operation based on the indication of the transmission configuration to be activated comprises determining whether multiple synchronization signal block or PCI within a transmission configuration belong to a same distributed unit or different distributed units; or
(g) determining that the communication device should perform the MAC reset operation based on the indication of the transmission configuration to be activated comprises determining that the communication device has moved from a first beam associated with a first group identifier, ID, to a second beam associated with a second group ID that is different than the first group ID based on the transmission configuration to be activated.

11. The method of Claim 10, feature group (g), further comprising:
assigning group IDs to groups of serving cell and/or non-serving cell configuration based on synchronization signal blocks belonging to a same PCI and/or based on an existing index in radio resource control, RRC,
wherein, optionally, the transmission configuration to be activated comprises a field indicating that the communication device perform the MAC reset.

12. The method of any of Claims 7 to 11, wherein the mobility procedure is a layer 1/layer 2, L1/L2, based inter-cell mobility,
wherein, optionally, the L1/L2 based inter-cell mobility comprises a MAC control element, CE.

13. A communication device (600) adapted to perform all steps of a method according to any one of Claims 1 to 6.

14. A network node (700) adapted to perform all steps of a method according to any one of Claims 7 to 12.

15. Computer program products each comprising a non-transitory storage medium (605, 705) including either:
- program code to be executed by processing circuitry (603) of a communication device (600), whereby execution of the program code causes the communication device to perform all steps of a method according to any one of Claims 1 to 6; or
- program code to be executed by processing circuitry (703) of a network node (700), whereby execution of the program code causes the network node to perform all steps of a method according to any one of Claims 7 to 12.

## Patentansprüche

1. Verfahren zum Betreiben einer Kommunikationsvorrichtung, die mit einer Mehrzahl von physischen Zellkennungen, PCI, für eine Mobilitätsprozedur, einer Mehrzahl von Übertragungskonfigurationen und einer oder mehreren Zellen konfiguriert ist, wobei jede Zelle auf einer gleichen Bedienungsfrequenz arbeitet und jede Zelle mit einer oder mehreren PCIs assoziiert ist, wobei das Verfahren Folgendes umfasst;
Empfangen (820) einer Angabe einer zu aktivierenden Übertragungskonfiguration aus einer Mehrzahl von Übertragungskonfigurationen, die mit einer nicht bedienenden Zelle oder einer physischen ID einer nicht bedienenden Zelle, PCI, assoziiert ist, von einem Netzwerkknoten; und
Bestimmen (830), eine Medienzugriffsteuerungs-Rücksetzoperation, MAC-Rücksetzoperation, durchzuführen, basierend auf der zu aktivierenden Übertragungskonfiguration.

2. Verfahren nach Anspruch 1, ferner umfassend:
Empfangen (810) der Mehrzahl von Übertragungskonfigurationen, die eine Mehrzahl von Übertragungskonfigurationsindikator-Zustandskonfigurationen, TCI-Zustandskonfigurationen, für eine jeweilige Mehrzahl von TCI-Zuständen umfasst, von dem Netzwerkknoten und
wobei das Empfangen der Angabe der zu aktivierenden Übertragungskonfiguration, die mit der nicht bedienenden Zelle oder der physischen ID der nicht bedienenden Zelle, PCI, assoziiert ist, Empfangen einer Angabe eines TCI-Zustands umfasst, der mit einer TCI-Zustandskonfiguration der Mehrzahl von TCI-Zustandskonfigurationen assoziiert ist.

3. Verfahren nach Anspruch 1 oder 2, wobei die zu aktivierende Übertragungskonfiguration, die mit der nicht bedienenden Zelle oder der physischen ID der nicht bedienenden Zelle, PCI, assoziiert ist, eine Angabe einer Quasi-Ortsgleichheitskonfiguration, QCL-Konfiguration, umfasst,
wobei optional die QCL-Konfiguration eine Referenzsignalkonfiguration umfasst, die mindestens einen von einem Synchronisationssignalblockindex, SSB-Index, und einem Kanalzustandsinformations-Referenzsignalindex, CSI-RS-Index, umfasst.

4. Verfahren nach einem der Ansprüche 1 bis 3, wobei:
(a) das Bestimmen, die MAC-Rücksetzoperation durchzuführen, basierend auf der zu aktivierenden Übertragungskonfiguration Bestimmen, die MAC-Rücksetzung durchzuführen, basierend auf einem Bestimmen umfasst, dass eine Schicht-1-Mobilität, L1-Mobilität, stattgefunden hat; und/oder
(b) das Bestimmen, die MAC-Rücksetzoperation durchzuführen, basierend auf der zu aktivierenden Übertragungskonfiguration Bestimmen umfasst, dass die Kommunikationsvorrichtung sich von einem ersten Strahl, der mit einer ersten Gruppenkennung, Gruppen-ID, assoziiert ist, zu einem zweiten Strahl bewegt hat, der mit einer zweiten Gruppen-ID assoziiert ist, die sich von der ersten Gruppen-ID unterscheidet; und/oder
(c) wobei die zu aktivierende Übertragungskonfiguration ein Feld umfasst, das angibt, dass die Kommunikationsvorrichtung die MAC-Rücksetzung durchführt, und wobei das Bestimmen, die MAC-Rücksetzoperation durchzuführen, Bestimmen umfasst, die MAC-Rücksetzoperation basierend auf dem Feld durchzuführen; oder das Bestimmen, die MAC-Rücksetzoperation durchzuführen, Folgendes umfasst: Prüfen, dass ein Synchronisationssignalblockindex, SSB-Index, und ein Kanalzustandsinformations-Referenzsignalindex, CSI-RS-Index, in der zu aktivierenden Übertragungskonfiguration mit der nicht bedienenden Zelle oder der physischen ID der nicht bedienenden Zelle, PCI, assoziiert sind; und Bestimmen, die MAC-Rücksetzoperation durchzuführen, basierend auf dem SSB-Index oder dem CSI-RS-Index.

5. Verfahren nach Anspruch 4, Merkmalsgruppe (b), wobei:
- das Empfangen der Angabe der zu aktivierenden Übertragungskonfiguration Empfangen einer Angabe der zweiten Gruppen-ID umfasst; oder
- Funkressourcensteuerungskonfigurationen, RRC-Konfigurationen, eine Gruppierung von Konfigurationen bedienender Zellen und/oder Konfigurationen nicht bedienender Zellen angeben, unter denen die Schicht-1-Mobilität, L1-Mobilität, erfolgen kann.

6. Verfahren nach einem der Ansprüche 1 bis 5, wobei:
- das Verfahren ferner Folgendes umfasst: Durchführen (840) der MAC-Rücksetzoperation; und/oder
- die Mobilitätsprozedur eine Schicht-1/Schicht-2-basierte, L1/L2-basierte, Mobilität zwischen Zellen ist, wobei optional die L1/L2-basierte Mobilität zwischen Zellen ein MAC-Steuerelement, MAC-CE, umfasst.

7. Verfahren zum Betreiben eines Netzwerkknotens in einem Kommunikationsnetzwerk mit einer Kommunikationsvorrichtung, die mit einer Mehrzahl von physischen Zellkennungen, PCI, für eine Mobilitätsprozedur, einer Mehrzahl von Übertragungskonfigurationen und einer oder mehreren Zellen konfiguriert ist, wobei jede Zelle auf einer gleichen Bedienungsfrequenz arbeitet und jede Zelle mit einer oder mehreren PCIs assoziiert ist, wobei das Verfahren Folgendes umfasst;
Senden (940) einer Angabe einer zu aktivierenden Übertragungskonfiguration aus einer Mehrzahl von Übertragungskonfigurationen, die mit einer nicht bedienenden Zelle oder einer physischen ID einer nicht bedienenden Zelle, PCI, assoziiert ist, an die Kommunikationsvorrichtung; und
Senden (950) einer Angabe an die Kommunikationsvorrichtung, um die MAC-Rücksetzung basierend auf der zu aktivierenden Übertragungskonfiguration durchzuführen.

8. Verfahren nach Anspruch 7, wobei:
(a) das Verfahren ferner Folgendes umfasst: Senden (910) einer Angabe der Mehrzahl von Übertragungskonfigurationen an die Kommunikationsvorrichtung; und/oder
(b) die Mehrzahl von Übertragungskonfigurationen eine Mehrzahl von Übertragungskonfigurationsindikator-Zustandskonfigurationen, TCI-Zustandskonfigurationen, für eine jeweilige Mehrzahl von TCI-Zuständen umfasst, und wobei das Senden der Angabe der zu aktivierenden Übertragungskonfiguration Senden einer Angabe eines TCI-Zustands umfasst, der mit einer TCI-Zustandskonfiguration der Mehrzahl von TCI-Zustandskonfigurationen assoziiert ist; und/oder
(c) Senden der Angabe der zu aktivierenden Übertragungskonfiguration, die mit der nicht bedienenden Zelle oder der physischen ID der nicht bedienenden Zelle, PCI, assoziiert ist, Senden einer Angabe einer Quasi-Ortsgleichheitskonfiguration, QCL-Konfiguration, umfasst; und/oder
(d) das Verfahren ferner Folgendes umfasst: Bestimmen (920), dass die Kommunikationsvorrichtung die MAC-Rücksetzoperation durchführen sollte, basierend auf der zu aktivierenden Übertragungskonfiguration; und Senden (930) einer Konfiguration an die Kommunikationsvorrichtung, die angibt, unter welchen L1-Mobilitätsmöglichkeiten die Kommunikationsvorrichtung eine Medienzugriffssteuerungs-Rücksetzoperation, MAC-Rücksetzoperation, durchführen sollte.

9. Verfahren nach Anspruch 8, Merkmalsgruppe (c), wobei die QCL-Konfiguration eine Referenzsignalkonfiguration umfasst, die mindestens einen von einem Synchronisationssignalblockindex, SSB-Index, und einem Kanalzustandsinformations-Referenzsignalindex, CSI-RS-Index, umfasst.

10. Verfahren nach Anspruch 8, Merkmalsgruppe (d), wobei:
(e) das Bestimmen, dass die Kommunikationsvorrichtung die MAC-Rücksetzoperation durchführen sollte, basierend auf der Angabe der zu aktivierenden Übertragungskonfiguration Bestimmen, die MAC-Rücksetzung durchzuführen, basierend darauf umfasst, ob eine Schicht-1-Mobilität, L1-Mobilität, stattgefunden hat; oder
(f) das Bestimmen, dass die Kommunikationsvorrichtung die MAC-Rücksetzoperation durchführen sollte, basierend auf der Angabe der zu aktivierenden Übertragungskonfiguration Bestimmen umfasst, ob mehrere Synchronisationsblöcke oder PCIs innerhalb einer Übertragungskonfiguration zu einer gleichen verteilten Einheit oder verschiedenen verteilten Einheiten gehören; oder
(g) das Bestimmen, dass die Kommunikationsvorrichtung die MAC-Rücksetzoperation durchzuführen sollte, basierend auf der Angabe der zu aktivierenden Übertragungskonfiguration Bestimmen, dass die Kommunikationsvorrichtung sich von einem ersten Strahl, der mit einer ersten Gruppenkennung, Gruppen-ID, assoziiert ist, zu einem zweiten Strahl bewegt hat, der mit einer zweiten Gruppen-ID assoziiert ist, die sich von der ersten Gruppen-ID unterscheidet, basierend auf der zu aktivierenden Übertragungskonfiguration umfasst.

11. Verfahren nach oder Anspruch 10, Merkmalsgruppe (g), ferner umfassend:
Zuordnen von Gruppen-IDs zu Gruppen von Konfigurationen bedienender Zellen und/oder nicht bedienender Zellen basierend auf Synchronisationssignalblöcken, die zu einer gleichen PCI gehören, und/oder basierend auf einem bestehenden Index in der Funkressourcensteuerung, RRC,
wobei optional die zu aktivierende Übertragungskonfiguration ein Feld umfasst, das angibt, dass die Kommunikationsvorrichtung die MAC-Rücksetzung durchführt.

12. Verfahren nach einem der Ansprüche 7 bis 11, wobei die Mobilitätsprozedur eine Schicht-1/Schicht-2-basierte, L1/L2-basierte, Mobilität zwischen Zellen ist,
wobei optional die L1/L2-basierte Mobilität zwischen Zellen ein MAC-Steuerelement, MAC-CE, umfasst.

13. Kommunikationsvorrichtung (600), die zum Ausführen aller Schritte eines Verfahrens nach einem der Ansprüche 1 bis 6 ausgelegt ist.

14. Netzwerkknoten (700), der zum Ausführen aller Schritte eines Verfahrens nach einem der Ansprüche 7 bis 12 konfiguriert ist.

15. Computerprogrammprodukte, die jeweils ein nichttransitorisches Speichermedium (605, 705) umfassen, das Folgendes umfasst:
- Programmcode, der von Verarbeitungsschaltungsanordnung (603) einer Kommunikationsvorrichtung (600) ausgeführt werden soll, wobei die Ausführung des Programmcodes die Kommunikationsvorrichtung zum Ausführen aller Schritte eines Verfahrens nach einem der Ansprüche 1 bis 6 veranlasst; oder
- Programmcode, der von Verarbeitungsschaltungsanordnung (703) eines Netzwerkknotens (700) ausgeführt werden soll, wobei die Ausführung des Programmcodes den Netzwerkknoten zum Ausführen aller Schritte eines Verfahrens nach einem der Ansprüche oder 7 bis 12 veranlasst.

## Revendications

1. Procédé de fonctionnement d'un dispositif de communication configuré avec une pluralité d'identifiants de cellules physiques, PCI, pour une procédure de mobilité, une pluralité de configurations de transmission, et une ou plusieurs cellules, chaque cellule fonctionnant à une même fréquence de desserte et chaque cellule étant associée à un ou plusieurs PCI, le procédé comprenant :
la réception (820) d'une indication d'une configuration de transmission à activer, parmi la pluralité de configurations de transmission, qui est associée à une cellule de non-desserte ou à un PCI de non-desserte, depuis un nœud de réseau ; et
la détermination (830) de réaliser une opération de réinitialisation de commande d'accès au support, MAC, sur la base de la configuration de transmission à activer.

2. Procédé selon la revendication 1, comprenant en outre :
la réception (810) de la pluralité de configurations de transmission, incluant une pluralité de configurations d'états d'indicateur de configuration de transmission, TCI, pour une pluralité respective d'états de TCI depuis le nœud de réseau, et
dans lequel la réception de l'indication de la configuration de transmission à activer qui est associée à la cellule de non-desserte ou au PCI de non-desserte comprend la réception d'une indication d'un état de TCI associé à une configuration d'état de TCI parmi la pluralité de configurations d'états de TCI.

3. Procédé selon la revendication 1 ou 2, dans lequel la configuration de transmission à activer qui est associée à la cellule de non-desserte ou au PCI de non-desserte comprend une indication d'une configuration de quasi-colocalisation, QCL,
dans lequel, facultativement, la configuration de QCL comprend une configuration de signal de référence incluant au moins l'un parmi un indice de bloc de signal de synchronisation, SSB, et un indice de signal de référence d'informations d'état de canal, CSI-RS.

4. Procédé selon l'une quelconque des revendications 1 à 3, dans lequel :
(a) la détermination de réaliser l'opération de réinitialisation MAC sur la base de la configuration de transmission à activer comprend la détermination de réaliser la réinitialisation MAC sur la base de la détermination qu'une mobilité de couche 1, L1, est survenue ; et/ou
(b) la détermination de réaliser l'opération de réinitialisation MAC sur la base de la configuration de transmission à activer comprend la détermination que le dispositif de communication s'est déplacé d'un premier faisceau associé à un premier identifiant, ID, de groupe à un deuxième faisceau associé à un deuxième ID de groupe qui est différent du premier ID de groupe ; et/ou
(c) dans lequel la configuration de transmission à activer comprend un champ indiquant que le dispositif de communication doit réaliser la réinitialisation MAC, et dans lequel la détermination de réaliser l'opération de réinitialisation MAC comprend la détermination de réaliser l'opération de réinitialisation MAC sur la base du champ ; ou la détermination de réaliser l'opération de réinitialisation MAC comprend : la vérification qu'un indice de bloc de signal de synchronisation, SSB, ou un indice de signal de référence d'informations d'état de canal, CSI-RS, dans la configuration de transmission à activer est associé à la cellule de non-desserte ou au PCI de non-desserte ; et la détermination de réaliser l'opération de réinitialisation MAC sur la base de l'indice SSB ou de l'indice CSI-RS.

5. Procédé selon la revendication 4, groupe de caractéristiques (b), dans lequel :
- la réception de l'indication de la configuration de transmission à activer comprend la réception d'une indication du deuxième ID de groupe ; ou
- des configurations de commande de ressources radio, RRC, indiquent un regroupement de configurations de cellules de desserte et/ou de configurations de cellules de non-desserte parmi lesquelles une mobilité de couche 1, L1, peut être réalisée.

6. Procédé selon l'une quelconque des revendications 1 à 5, dans lequel :
- le procédé comprend en outre : la réalisation (840) de l'opération de réinitialisation MAC ; et/ou
- la procédure de mobilité est une mobilité inter-cellules basée sur couche 1/couche 2, L1/L2, dans lequel, facultativement, la mobilité inter-cellules basée sur L1/L2 comprend un élément de commande, CE, MAC.

7. Procédé de fonctionnement d'un nœud de réseau dans un réseau de communication avec un dispositif de communication qui est configuré avec une pluralité d'identifiants de cellules physiques, PCI, pour une procédure de mobilité, une pluralité de configurations de transmission, et une ou plusieurs cellules, chaque cellule fonctionnant à une même fréquence de desserte et chaque cellule étant associée à un ou plusieurs PCI, le procédé comprenant :
la transmission (940) d'une indication d'une configuration de transmission à activer, parmi la pluralité de configurations de transmission, qui est associée à une cellule de non-desserte ou à un identifiant de cellule physique, PCI, de non-desserte au dispositif de communication ; et
la transmission (950) d'une indication au dispositif de communication de réaliser la réinitialisation MAC sur la base de la configuration de transmission à activer.

8. Procédé selon la revendication 7, dans lequel :
(a) le procédé comprend en outre : la transmission (910) d'une indication de la pluralité de configurations de transmission au dispositif de communication ; et/ou
(b) la pluralité de configurations de transmission comprend une pluralité de configurations d'états d'indicateur de configuration de transmission, TCI, pour une pluralité respective d'états de TCI, et dans lequel la transmission de l'indication de la configuration de transmission à activer comprend la transmission d'une indication d'un état de TCI associé à une configuration d'état de TCI parmi la pluralité de configurations d'états de TCI ; et/ou
(c) la transmission de l'indication de la configuration de transmission à activer qui est associée à la cellule de non-desserte ou au PCI de non-desserte comprend la transmission d'une indication d'une configuration de quasi-colocalisation, QCL ; et/ou
(d) le procédé comprend en outre : la détermination (920) que le dispositif de communication doit réaliser l'opération de réinitialisation MAC sur la base de la configuration de transmission à activer ; et la transmission (930) d'une configuration au dispositif de communication indiquant les possibilités de mobilité L1 dans le cadre desquelles le dispositif de communication doit réaliser une opération de réinitialisation de commande d'accès au support, MAC.

9. Procédé selon la revendication 8, groupe de caractéristiques (c), dans lequel la configuration de QCL comprend une configuration de signal de référence incluant au moins l'un parmi un indice de bloc de signal de synchronisation, SSB, et un indice de signal de référence d'information d'état de canal, CSI-RS.

10. Procédé selon la revendication 8, groupe de caractéristiques (d), dans lequel :
(e) la détermination que le dispositif de communication doit réaliser l'opération de réinitialisation MAC sur la base de l'indication de la configuration de transmission à activer comprend la détermination de réaliser la réinitialisation MAC sur la base de si une mobilité de couche 1, L1, s'est déroulée ou non ; ou
(f) la détermination que le dispositif de communication doit réaliser l'opération de réinitialisation MAC sur la base de l'indication de la configuration de transmission à activer comprend la détermination si de multiples blocs de signal de synchronisation ou de multiples PCI dans une configuration de transmission appartiennent à une même unité distribuée ou à différentes unités distribuées ; ou
(g) la détermination que le dispositif de communication doit réaliser l'opération de réinitialisation MAC sur la base de l'indication de la configuration de transmission à activer comprend la détermination que le dispositif de communication s'est déplacé d'un premier faisceau associé à un premier identifiant, ID, de groupe à un deuxième faisceau associé à un deuxième ID de groupe qui est différent du premier ID de groupe sur la base de la configuration de transmission à activer.

11. Procédé selon la revendication 10, groupe de caractéristiques (g), comprenant en outre :
l'attribution d'ID de groupe à des groupes de configurations de cellules de desserte et/ou de cellules de non-desserte sur la base de blocs de signal de synchronisation appartenant à un même PCI et/ou sur la base d'un indice existant dans une commande de ressources radio, RRC,
dans lequel, facultativement, la configuration de transmission à activer comprend un champ indiquant que le dispositif de communication doit réaliser la réinitialisation MAC.

12. Procédé selon l'une quelconque des revendications 7 à 11, dans lequel la procédure de mobilité est une mobilité inter-cellules basée sur couche 1/couche 2, L1/L2,
dans lequel, facultativement, la mobilité inter-cellules basée sur L1/L2 comprend un élément de commande, CE, MAC.

13. Dispositif de communication (600) adapté pour réaliser toutes les étapes d'un procédé selon l'une quelconque des revendications 1 à 6.

14. Nœud de réseau (700) adapté pour réaliser toutes les étapes d'un procédé selon l'une quelconque des revendications 7 à 12.

15. Produits programmes informatiques comprenant chacun un support de stockage non transitoire (605, 705) incluant :
- un code de programme à exécuter par une circuiterie de traitement (603) d'un dispositif de communication (600), une exécution du code de programme amenant le dispositif de communication à réaliser toutes les étapes d'un procédé selon l'une quelconque des revendications 1 à 6 ; ou
- un code de programme à exécuter par une circuiterie de traitement (703) d'un nœud de réseau (700), une exécution du code de programme amenant le nœud de réseau à réaliser toutes les étapes d'un procédé selon l'une quelconque des revendications 7 à 12.
